# EUROPÄISCHE PATENTANMELDUNG

(11) **EP 0 896 920 A2**
(43) Veröffentlichungstag der Anmeldung: **17.02.1999**
(21) Anmeldenummer: 98113173.3
(22) Anmeldetag: 15.07.1998
(51) Int. Cl.: B62K 23/04, B62M 25/04

(54) **Betätigungseinrichtung für Fahrradgetriebe**

(30) Priorität: 11.08.1997 DE 19734683
(71) Anmelder: SRAM Deutschland GmbH, 97424 Schweinfurt (DE)
(72) Erfinder: Rau, Johannes, Dipl.-Ing., 97421 Schweinfurt (DE)

(57) **Zusammenfassung**

Die Erfindung zeigt eine Betätigungseinrichtung zum positionierten Schalten von Fahrradgetrieben, mit einem Gehäuse (1) und einem Drehelement (2), wobei zwischen Gehäuse und Drehelement eine Rastenfeder (4) angeordnet ist. Die Rastenfeder ist als Schlingfeder ausgebildet und erzeugt zur Bewegung eines Betätigungszuges am Drehelement in der einen Drehrichtung einen höheren Widerstand als in der anderen Drehrichtung. Die Rastenfeder ist um einen Gehäuseteil des Gehäuses angeordnet der Rasten aufweist, in die eine Nase (14) der Rastenfeder eingreift, die an einem Federende angeordnet ist. Am anderen Federende ist ein Haken (11) angebogen, der in eine Aussparung (6) des Drehelementes eingreift, durch welche die Rastenfeder bewegt wird. Der Vorteil der Anordnung liegt in dem geringen Platzbedarf, in der einfachen Montage sowie in der Möglichkeit, einen beliebigen Unterschied im Drehwiderstand in den beiden Drehrichtungen durch besondere Auslegung der Rastenfeder zu erreichen.

## Beschreibung

Die Erfindung betrifft eine Betätigungseinrichtung zum positionierten Schalten von Fahrradgetrieben, wie Mehrgangnaben oder Kettenschaltungen, gemäß dem Oberbegriff des Anspruchs 1.

Mit der DE 44 42 953 ist ein Rastenschalter für Fahrradgetriebe bekannt geworden, der ein Rastelement mit Rasten, eine Rastenfeder mit einer Rastnase und zwei Vorsprüngen sowie einen Schieber mit verschiedenen Vorspannstufen für die Rastenfeder aufweist. Die Rastenfeder liegt mit ihren beiden Enden auf dem Schieber auf, während die in der Mitte der Rastenfeder befindliche Nase mit den Rasten des Rastelementes zusammenwirkt. Die Rastfeder ist in einem Ringraum des Gehäuses angeordnet, wobei dieser um einen bestimmten Betrag eines gewünschten Überschaltweges länger ist, als die Feder selbst. Es lassen sich also die folgenden Anforderungen an die Betätigung mit dem vorliegenden Rastenschaltern verwirklichen: Fühlbares Rasten der Gänge; verschieden hohe Betätigungskräfte durch verstellbare Federvorspannung; Überschaltwege durch Totgang; unterschiedlicher Drehwiderstand in den beiden Drehrichtungen durch Rasten mit verschiedenem Rastnutwinkel.

Die eben genannten Anforderungen lassen sich mit der Betätigungseinrichtung der vorgeschlagenen Erfindung ebenfalls lösen mit dem Vorteil, daß die vorgeschlagenen Rastenfedern in radialer Erstreckung einen nur geringen Bauraum beansprucht. In erster Linie jedoch ist es möglich, einen unterschiedlichen Drehwiderstand in beiden Drehrichtungen besonders zu berücksichtigen. Es hat sich gezeigt, daß unterschiedliche Rastnutwinkel allein für einen ausreichenden Unterschied des Drehwiderstandes in beiden Richtungen nicht ausreichen. Es wird daher vorgeschlagen, den Schlingfedereffekt auszunutzen und diesen dem Effekt mit verschiedenen Nutwinkeln der Rasten zu überlagern. Der Schaltwiderstand erhöht sich je nach der Größe des Umschlingungswinkels durch das Zuziehen der Rastenfeder um den inneren Gehäuseteil, auf dem sie aufliegt, während in der entgegengesetzten Drehrichtung die Feder leichter schaltbar ist, da sie sich von dem Gehäuseteil abhebt und lediglich an einem Widerlager im Gehäuse anläuft.

Es ist daher die Aufgabe der Erfindung, eine Betätigungseinrichtung zum positionierten Schalten von Fahrradgetrieben zu schaffen, die einen deutlichen Drehwiderstandsunterschied für die beiden Drehrichtungen aufweist, wobei ein Minimum an Einbauraum für die Rastenfeder zugestanden ist.

Die Lösung der Aufgabe geht aus dem kennzeichnenden Teil des Anspruchs 1 hervor; ergänzende Merkmale zur Abrundung der vorgeschlagenen Lösung sind den Unteransprüchen zu entnehmen.

Ein Ausführungsbeispiel einer Betätigungseinrichtung zum positionierten Schalten von Fahrradgetrieben wird anhand von Ausschnittszeichnungen veranschaulicht. Es zeigen:
- Fig. 1: eine Betätigungseinrichtung, umfassend ein Gehäuse, ein Drehelement sowie eine zwischen beiden angeordnete Rastenfeder;
- Fig. 2: die Rastenfeder mit einem Haken und einer Nase;
- Fig. 3: die Rastenfeder aus Bandmaterial in perspektivischer Darstellung.

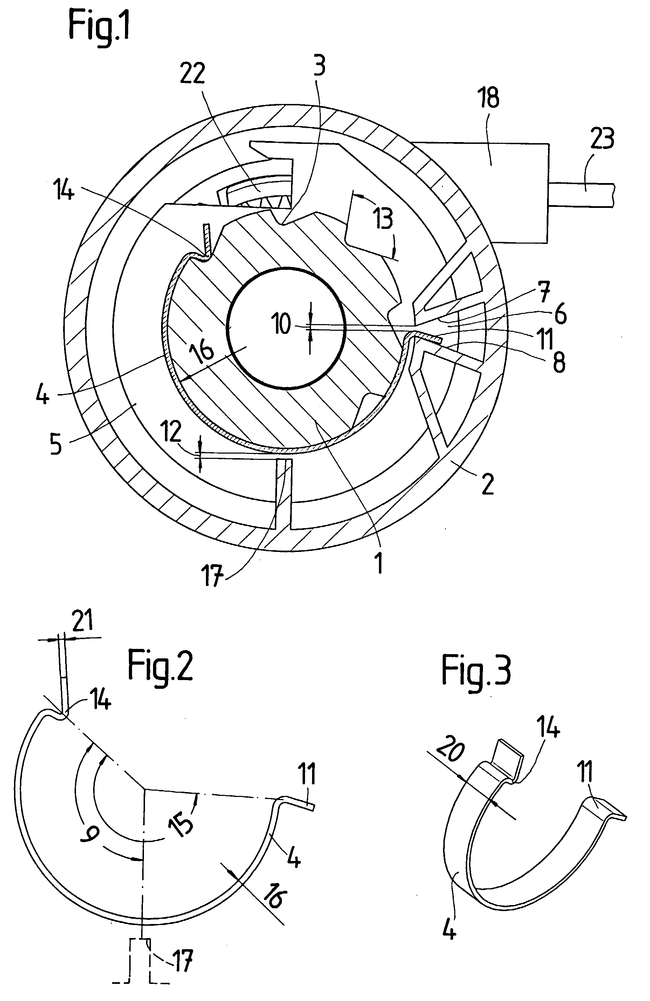

Die Fig. 1 zeigt in Teilschnittdarstellung eine Betätigungseinrichtung für Fahrradgetriebe, die als Drehgriffschalter, Daumenschalter, Rahmenschalter oder ähnliches ausgebildet sein kann mit einem Gehäuse 1, einem Drehelement 2 und einer zwischen dem Gehäuse 1 und dem Drehelement 2 angeordneten Rastenfeder 4 in einem Ringraum 5. Das Drehelement 2 weist eine Aussparung 6 mit einem ersten Anschlag 7 und einem zweiten Anschlag 8 auf, wobei ein Haken 11 der Rastenfeder 4 in die Aussparung 6 eingreift und mit den Anschlägen 7 und 8 unter Bildung eines Totgangs 10 zusammenwirkt. Der Haken 11 bildet das eine Ende der kreisförmig geformten Rastenfeder 4, während das andere Ende eine Nase 14 aufweist. Die Rastenfeder 4 legt sich schlingfederartig um den inneren Teil des Gehäuses 1 mit einem Umschlingungsdurchmesser 16, der Rasten 3 aufweist, welche einen Rastenutwinkel 13 aufweisen, der mit der Nase 14 der Rastenfeder 4 zusammenwirkt. Die Rastenfeder 4 weist einen Umschlingungswinkel 15 von etwa 220° auf, der gerade groß genug ist, um bei der Betätigung der Rastenfeder 4 gegen den Uhrzeigersinn eine ausreichende Reibungsverstärkung zu erzielen gegenüber der Betätigungsrichtung im Uhrzeigersinn, wo die Rastenfeder 4 keinen Widerstand entgegensetzt. Vielmehr wird sie vom Umschlingungsdurchmesser 16 abheben und die Nase 14 von einer Nut 3 zur anderen Nut 3 nur dann transportieren, wenn ein Widerlager 17 mit einem bestimmten Abstand 12, der den Totgang 10 mit beeinflußt, am Drehelement 2 angeordnet ist. Das Widerlager 17 ist in einem bestimmten Winkel 9 von der Nase 14 angeordnet, wobei der Winkel 9 in etwa die Hälfte des Umschlingungswinkels 15 ausmacht. Das Drehelement 2, welches vom Fahrer betätigt wird, ist mit einer Spul-einrichtung 22 der Betätigungseinrichtung verbunden, die einen Betätigungszug 23 aufwickelt, welcher aus der Betätigungseinrichtung über einen Ansatz 18 austritt.

Gemäß Fig. 2 ist die Rastenfeder 4 mit einer Blechstärke 21 dargestellt, wobei das Verhältnis der drei wirksamen Punkte der Rastenfeder 4, nämlich dem Haken 11, dem Widerlager 17 und der Nase 14 veranschaulicht ist.

Die perspektivische Darstellung der Rastenfeder 4 gemäß Fig. 3 zeigt die Beschaffenheit der Rastenfeder 4 als Stahlband mit einer Breite 20.

Die Funktion der Betätigungseinrichtung wird in erster Linie durch die unterschiedlichen Drehwiderstände für die beiden Drehrichtungen des Drehelementes 12 bestimmt. Bei Drehung des Drehelementes 2 gegen den Uhrzeigersinn gemäß Fig. 1 sind höhere Kräfte erforderlich als bei der Drehung im Uhrzeigersinn. Mehrere Faktoren sind es, die die Drehwiderstände bei Drehung des Drehelements gegen die Drehrichtung erhöhen können: Die Größe des Umschlingungswinkels 15, die Größe und Lage des Rastnutwinkels 13 sowie die Ausbildung der Winkel an der Nase 14. Einflußfaktoren für die Betätigungskräfte durch Drehen des Drehelementes 22 in Drehrichtung sind die Blechstärke 21, die Position des Widerlagers 17, der Abstand 12 des Widerlagers 17 von der Rastenfeder 4 sowie die Lage und die Größe des Rastnutwinkels 13.

Von Vorteil ist der geringe Raumbedarf der Rastenfeder 4 sowie ihre einfache Montage auf dem Gehäuseteil des Gehäuses 1. Begünstigt wird die Montage durch die Vorspannung der als Schlingfeder ausgebildeten Rastenfeder 4, die hierdurch nach ihrer Montage auf dem Gehäuseteil gegen Herabfallen gesichert ist.

## Patentansprüche

1. Betätigungseinrichtung zum positionierten Schalten von Fahrradgetrieben, umfassend
* ein Gehäuse (1) mit einem Ringraum (5);
* ein vom Fahrer betätigbares Drehelement (2);
* eine Rastenfeder (4),
* wobei die Rastenfeder (4) zwischen dem Drehelement (2) und dem drehfest angeordneten Gehäuse (1) angeordnet ist und
* eine Nase (14) aufweist, die durch Betätigen des Drehelementes (2) mit verschiedenen Rasten (3) nacheinander in Eingriff bringbar ist,
dadurch gekennzeichnet,
daß die Rastenfeder (4) als Schlingfeder mit einem Umschlingungswinkel (15) zwischen 180° und 360° um einen inneren Teil des Gehäuses (1) mit einem Umschlingungsdurchmesser (16) angeordnet ist.

2. Betätigungseinrichtung nach Anspruch 1,
dadurch gekennzeichnet,
daß die Rastenfeder (4) am ersten Federende eine Nase (14) und am zweiten Federende eine Mitnahmeverbindung zum Drehelement (2) aufweist.

3. Betätigungseinrichtung nach einem der Ansprüche 1 oder 2,
dadurch gekennzeichnet,
daß die Mitnahmeverbindung aus einem Haken (6) am zweiten Federende der Rastenfeder (4) besteht, der mit einer Aussparung im Drehelement (2) zusammenwirkt.

4. Betätigungseinrichtung nach einem der Ansprüche 1 bis 3,
dadurch gekennzeichnet,
daß die Aussparung (6) im Drehelement (2) für den Haken (11) einen ersten Anschlag (7) und einem zweiten Anschlag (8) aufweist, die beim Hin- und Herdrehen des Drehelementes (2) unter Bildung eines Totgangs (10) abwechselnd mit dem Haken (11) in Mitnahmeberührung kommen.

5. Betätigungseinrichtung nach einem der Ansprüche 1 bis 4,
dadurch gekennzeichnet,
daß das Drehelement (2) ein Widerlager (17) aufweist, welches am Umfang der Rastenfeder (4) in einem Winkel (9) ausgehend von der Nase (14) angeordnet ist und einen Abstand (12) zur Rastenfeder (4) aufweist.

6. Betätigungseinrichtung nach Anspruch 5,
dadurch gekennzeichnet,
daß der Winkel (9) etwa die Hälfte des Umschlingungswinkels (15) beträgt.

7. Betätigungseinrichtung nach Anspruch 5,
dadurch gekennzeichnet,
daß der Abstand (12) des Widerlagers (17) zur Rastenfeder (4) je nach Anforderungen an den Totgang bis zu 5 mm beträgt.
